# EUROPEAN PATENT SPECIFICATION

(11) **EP 1 574 104 B1**
(45) Date of publication and mention of the grant of the patent: **06.09.2006**
(21) Application number: 03782629.4
(22) Date of filing: 16.12.2003
(51) Int. Cl.: H04Q 7/38

(54) **A METHOD OF CONTROLLING SERVICES ON A MOBILE PHONE NETWORK**
VERFAHREN ZUR STEUERUNG VON DIENSTEN IN EINEM MOBILTELEFONNETZ
PROCEDE DE COMMANDE DE SERVICES SUR UN RESEAU TELEPHONIQUE MOBILE

(30) Priority: 19.12.2002 GB 0229450; 06.10.2003 GB 0323320
(43) Date of publication of application: 14.09.2005
(73) Proprietor: SIEMENS AKTIENGESELLSCHAFT, 80333 München (DE)
(72) Inventor: TRAYNARD, Jean-Michel, 81667 Munich (DE); EDWIN, Diana Clare, Southampton, Hampshire SO15 4HU (GB)
(86) International application number: PCT/GB2003/005466
(87) International publication number: WO 2004/057898

(56) References cited:
- EP-A- 1 189 389
- DE-A- 10 038 256
- US-A- 4 901 313
- US-A- 5 297 144
- US-A1- 2001 051 529

## Description

This invention relates to a method of controlling services on a mobile phone network.

For some cellular radio services the radio access network may be required to count the number of users in a cell with a particular attribute or status. In order to do this, the network sends one or more messages on a downlink channel which can be received by all users in the cell (regardless of whether the network is aware of their presence) containing the description of the "attribute" for which responses are being sought. All users which receive the downlink message and possess the required attribute respond with an uplink message. Therefore, the network may count the number of these user responses up to a specified (threshold) number and/or for a specified period of time.

One example of a cellular radio system is global system for mobile communications(GSM)/enhanced data rates for GSM evolution (EDGE) radio access network (GERAN), where the users are mobile stations and the specified attribute may be that the mobile station is subscribed to a multicast mode multimedia broadcast/multicast service (MBMS) service. For this MBMS service the network needs to count user responses in each cell to see whether to send multicast data in that cell.

For example, if there are no subscribed users in a cell, the multicast data may not be transmitted in the cell; if there are less than a threshold number of subscribed users in a cell, the multicast data may be transmitted on a point-to-point channel; and, if there are more than a threshold number of subscribed users in a cell, the multicast data may be sent on a point-to-multipoint channel.

Currently, in order for the network to count the number of user responses, each mobile station would have to perform a standard access request, packet channel request (PCR) message, on an individual basis and be assigned resources, packet uplink assignment message, to send the necessary "response" message on the assigned radio resources.

This access procedure always involves identifying the mobile station, as the access is performed on a contention based channel. The identification procedure consists of sending, on the assigned resource, either a mobile station identifier in the subsequent packet resource request message, or a mobile station identifier in the subsequent user data blocks.

The standard access procedure of resource request, assignment and user identification incurs a minimum of 1.5 round trip delays across the radio interface and also uses up radio resources which could be better used granting access to users wishing to perform normal uplink data transmission.

US5297144 describes a reservation polling protocol whereby remote stations can reserve a portion of a channel for data messages, then transmit their data in the reserved slots in response to a poll from a central station. The central station assigns a number of data slots in a data transfer period which corresponds to the number of reservation requests made in a reservation request period by the remote stations.

In accordance with the present invention, a method of controlling services on a mobile phone network comprises causing a network controller to broadcast a message to all users within a cell on a network requesting a response from users having a specific attribute; wherein each mobile station which responds to the broadcast sends only an initial message directly to the network controller; wherein the initial message is of a standard network contention access procedure, such that the number of responses may be processed by the network controller without any mobile station identifier being provided to the network controller; wherein the number of responses counted is compared with a predetermined value; and wherein if the result exceeds the predetermined value a second message is broadcast to all users, indicating the start of a multicast transmission.

The present invention provides a more efficient method of assessing the number of users requiring a particular service by using only an initial message of a standard network contention access procedure, so enabling radio resources to be available to other users. The requirement to determine the number of users does not require identification of every user wishing to respond to the MBMS notification, so the prior art procedure of identifying each mobile station is unnecessary. The present invention provides a faster solution and one which is more efficient in terms of radio resource.

A category of response, positive or negative, can also be determined from the initial message, although in general a user which gave a negative response would tend to do this by not responding at all, rather than responding to say they were not interested, in which case only positive responses would be counted. The category of response further assists the network in deciding whether or not to send a multicast message in the cell. The basis of the decision can be predefined. If the number of users appears to justify provision of the service, a second message is sent.

Preferably, the network controller causes a response timer setting at the mobile station to be recalculated to modify the time after which the mobile station retransmits its initial message, such that the network controls the interval at which messages are retransmitted or prevents messages being transmitted more than once.

Preferably, the network is GERAN.

Preferably, the initial message comprises a legacy channel request, PCR or enhanced general packet radio service (EGPRS) PCR message with modified content to distinguish it from a standard access request.

Preferably, the specific attribute is that the mobile station is subscribed to a multicast mode MBMS service.

The second message may be a broadcast, but preferably, the second message advises all mobile stations of the location of data available for downloading to each mobile station subsequently.

An example of a method of controlling services on a mobile phone network in accordance with the present invention will now be described with reference to the accompanying drawings in which:-
Figure 1 illustrates a conventional mobile initiated access procedure; and,
Figure 2 illustrates a method of controlling services on a mobile phone network in accordance with the present invention..

For the purpose of these examples, the cellular radio system described is GERAN and the users are mobile stations. A chosen specified attribute is that the mobile station is subscribed to a multicast mode MBMS service. For this MBMS multicast service the network needs to count user responses in each cell to see whether to send the multicast data in that cell. The decision on whether to send multicast data may be dependent on various criteria. For example, whether there are any subscribed users in a cell; whether there are less than a threshold number of subscribed users in a cell; and whether there are more than a threshold number of subscribed users in a cell. If there are no subscribed users then the network can choose that the multicast data is not transmitted in the cell; if there are less than a threshold number of subscribed users in a cell, then the multicast data can be transmitted on a point-to-point channel; and if there are more than a threshold number of subscribed users in a cell, then the multicast data can be sent on a point-to-multipoint channel. Different criteria and different consequences can be set according to the network operation. To count the number of users having a particular attribute, a downlink "notification" message is not defined and an uplink "response" message is one of channel request, PCR or EGPRS PCR.

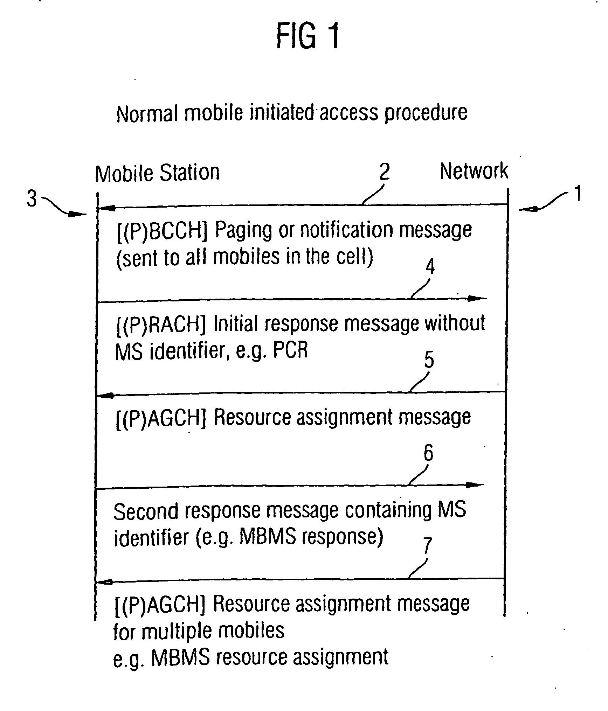

In a conventional procedure, if the network needs to count the number of user responses as described above, each mobile station (MS) has to perform a standard access request, PCR message, on an individual basis and be assigned resources, packet uplink assignment message, to send the necessary "response" message on the assigned radio resources. Fig. 1 illustrates this procedure. A network 1 sends a paging or notification message 2 using a downlink common control channel, e.g. packet broadcast control channel PBCCH to all mobiles in a call. Each mobile station 3 replies on an uplink common control channel, e.g. packet random access channel (PRACH), to give an initial response message 4 without an MS identifier e.g. PCR, indicating a normal access procedure request. The network then sends a resource assignment message 5 using the downlink common control channel, e.g. packet access grant channel (PAGCH). This example is given for packet data services, but use of packets is optional, i.e. the channel could be AGCH. The MS then sends a second response message 6 (e.g. an MBMS response) containing the MS identifier and the network 1 uses the downlink common control channel, e.g. PAGCH, to send a resource assignment message 7 for multiple mobiles e.g. MBMS resource assignment.

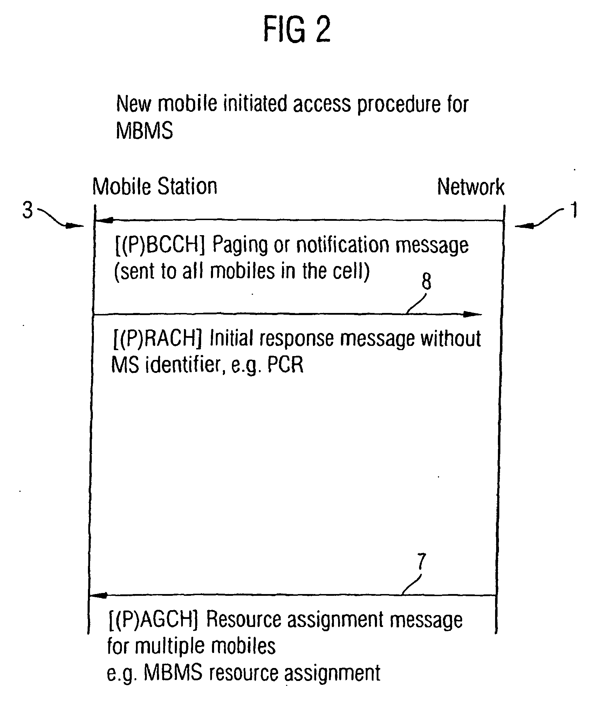

Fig. 2 illustrates the method of the present invention. Here, the network 1 sends out a paging or notification message 2 as before to all mobile stations. Each mobile station which wishes to reply, then sends a unique message 8 indicating an MBMS response. This is sent on the uplink contention-based control channel to inform the network that the mobile station is responding to the MBMS notification/paging from the network and is not performing the usual access procedure. Mobile stations which send this type of response will not be expecting resources to be assigned, but will wait for an acknowledgement from the network, which can be the resource assignment message 7. The network can, for example, indicate either the start of the multicast transmission or the termination of the "response gathering" time as its acknowledgement to each mobile, but it does not need to direct this to any particular mobile to have its effect. In this way the conventional access procedure is circumvented and advantages are gained in reduced signalling delay and reduced resource usage.

The scenario of attempting to identify the number of users in a cell having a particular attribute or status does not require identification of every user wishing to respond to the MBMS notification. The present invention achieves a faster and more radio resource efficient solution, without including this unnecessary part of the procedure.

The procedure of the present invention allows the network to count up to a threshold number of mobile stations in a cell which respond to the MBMS notification/paging message. The network can manage the "response gathering" time by transmitting an acknowledgement to terminate this period, or by re-sending the notification message to ask for users to repeat their responses.

In GPRS today, mobile stations on a contention-based uplink control channel, such as random access channel (RACH) or packet RACH, must wait for a random, uniformly distributed, delay period before attempting to retransmit. For a mobile station requesting uplink data transmission, this delay period is calculated by the network according to the acceptable delays that can be tolerated in general by uplink data transmissions. Currently there is no consideration given to an uplink message on the (P)RACH which is not for the reason of initiating an uplink data transmission as it was not a realistic scenario prior to the introduction of MBMS.

One solution is that an access persistence control mechanism is modified to enable this counting process to be completed whilst reducing the probability that the common uplink control channel will experience overload from retransmissions of the mobile stations' MBMS response messages. This can be done through modifying the broadcast information carrying these parameters, through assigning fixed values to the mobile stations or by commanding the mobile station to recalculate the MBMS response timer values using the broadcast information as an input value.

One approach is to circumvent the normal access mechanism, thereby not assigning uplink resources to the mobile station in the normal way, but noting and incrementing the count of the number of responses from mobile stations in a cell. The means by which this is done is by modifying the contents of the legacy channel request, PCR and EGPRS PCR messages in order to distinguish the MBMS response from a normal access procedure.

Another approach is to modify the retransmit timer in the mobile used for access persistence control in order to avoid overloading the (P)RACH during the "response gathering" period. This enables the mobile station's retransmission timer to be adjusted to suit the length of time for which the network wishes to collect user responses.

## Claims

1. A method of controlling services on a mobile phone network (1), the method comprising causing a network controller to broadcast a message (2) to all users within a cell on a network requesting a response from users having a specific attribute; wherein each mobile station (3) which responds to the broadcast sends only an initial message directly to the network controller; wherein the initial message (8) is of a standard network contention access procedure, such that the number of responses may be processed by the network controller without any mobile station identifier being provided to the network controller; wherein the number of responses counted is compared with a predetermined value; and wherein if the result exceeds the predetermined value a second message (7) is broadcast to all users, indicating the start of a multicast transmission.

2. A method according to claim 1, wherein the network controller causes a response timer setting at the mobile station to be recalculated to modify the time after which the mobile station retransmits its initial message (8), such that the network controls the interval at which messages are retransmitted or prevents messages being transmitted more than once.

3. A method according to claim 1 or claim 2, wherein the network (1) is GERAN.

4. A method according to any preceding claim, wherein the initial message comprises a legacy CHANNEL REQUEST, PACKET CHANNEL REQUEST or EGPRS PACKET CHANNEL REQUEST message with modified content to distinguish it from a standard access request.

5. A method according to any preceding claim, wherein the specific attribute is that the mobile station is subscribed to a multicast mode MBMS service.

6. A method according to any preceding claim, wherein the second message (7) advises all mobile stations (3) of the location of data available for downloading to each mobile station subsequently.

## Patentansprüche

1. Verfahren zur Steuerung von Diensten in einem Mobiltelefonnetz (1), wobei das Verfahren umfasst, eine Netzsteuerung dazu zu veranlassen, eine Nachricht (2) an alle Teilnehmer in einer Zelle eines Netzes rundzusenden, die von den Teilnehmern eine Antwort erfordert, welche ein bestimmtes Attribut aufweist; wobei jede Mobilstation (3), die auf die Rundsendenachricht antwortet, lediglich eine erste Nachricht direkt an die Netzsteuerung sendet; wobei die erste Nachricht (8) Bestandteil einer standardmäßigen Prozedur des Wettbewerbs um Zugriff im Netz ist, derart, dass die Mehrzahl der Antworten von der Netzsteuerung verarbeitet werden kann, ohne dass eine Kennung einer Mobilstation an die Netzsteuerung bereitgestellt wird; wobei die Mehrzahl der gezählten Antworten mit einem vorab definierten Wert verglichen wird; und wobei, wenn das Ergebnis den vorab definierten Wert übersteigt, eine zweite Nachricht (7) an alle Teilnehmer rundgesendet wird, die den Beginn einer Multicast-Übertragung ankündigt.

2. Verfahren gemäß Anspruch 1, wobei die Netzsteuerung veranlasst, dass eine Einstellung eines Antwort-Timers in der Mobilstation neu berechnet wird, um die Zeit zu verändern, nach der die Mobilstation ihre erste Nachricht (8) erneut sendet, sodass das Netz das Intervall steuert, in dem Nachrichten wiederholt gesendet werden, oder verhindert, dass Nachrichten mehr als einmal gesendet werden.

3. Verfahren gemäß Anspruch 1 oder Anspruch 2, wobei das Mobilfunknetz (1) das GERAN ist.

4. Verfahren gemäß einem der vorstehenden Ansprüche, wobei die erste Nachricht eine vorhandene CHANNEL REQUEST-, PACKET CHANNEL REQUEST- oder EGPRS PACKET CHANNEL REQUEST-Nachricht mit modifiziertem Inhalt ist, um sie von der standardmäßigen Zugriffsanforderung unterscheiden zu können.

5. Verfahren gemäß einem der vorstehenden Ansprüche, wobei das bestimmte Attribut darin besteht, dass die Mobilstation zu einem Multicast-MBMS-Dienst angemeldet ist.

6. Verfahren gemäß einem der vorstehenden Ansprüche, wobei die zweite Nachricht (7) allen Mobilstationen (3) den Speicherort der Daten mitteilt, die in der Folge für jede Mobilstation zum Herunterladen verfügbar sind.

## Revendications

1. Procédé de commande de services sur un réseau de téléphonie mobile (1), le procédé consistant à amener une commande de réseau à diffuser un message (2) à tous les utilisateurs au sein d'une cellule, sur un réseau, demandant une réponse des utilisateurs ayant un attribut spécifique, sachant que chaque poste mobile (3) qui répond au message diffusé envoie seulement un message initial directement à la commande de réseau, sachant que le message initial (8) relève d'une procédure ordinaire d'accès à un réseau par contention, de telle sorte que le nombre de réponses puisse être traité par la commande de réseau sans qu'aucun identifiant de poste mobile soit fourni à la commande de réseau, sachant que le nombre de réponses comptées est comparé avec une valeur prédéterminée, et sachant que si le résultat dépasse la valeur prédéterminée, un second message (7) est diffusé à tous les utilisateurs, indiquant le début d'une transmission multidestinataire.

2. Procédé selon la revendication 1, dans lequel la commande de réseau fait recalculer un réglage de temporisateur de réponse sur le poste mobile pour modifier le temps après lequel le poste mobile réémet son message initial (8) de telle sorte que le réseau régule l'intervalle auquel les messages sont réémis ou empêche les messages d'être émis plus d'une fois.

3. Procédé selon la revendication 1 ou la revendication 2, dans lequel le réseau (1) est un réseau d'accès radioélectrique pour GSM (Groupes systèmes mobiles)/EDGE (débits binaires améliorés pour les GSM de demain) (GERAN).

4. Procédé selon l'une quelconque des revendications précédentes, dans lequel le message initial consiste en un message patrimonial CHANNEL REQUEST (demande de voie), PACKET CHANNEL REQUEST (demande de voie par paquets) ou EGPRS PACKET CHANNEL REQUEST (demande de voie par paquets pour Service général de radiocommunication en mode paquet à débit amélioré) à contenu modifié pour le distinguer d'une demande d'accès ordinaire.

5. Procédé selon l'une quelconque des revendications précédentes, dans lequel l'attribut spécifique consiste en ce que le poste mobile est abonné à un service multimédia à multidiffusion générale/sélective (MBMS) à mode de multidiffusion sélective.

6. Procédé selon l'une quelconque des revendications précédentes, dans lequel le second message (7) avise tous les postes mobiles (3) de l'emplacement de données disponibles pour être téléchargées sur chaque poste mobile ultérieurement.
